# EUROPÄISCHE PATENTSCHRIFT

(11) **EP 1 096 133 B1**
(45) Veröffentlichungstag und Bekanntmachung des Hinweises auf die Patenterteilung: **09.07.2003**
(21) Anmeldenummer: 00121993.0
(22) Anmeldetag: 10.10.2000
(51) Int. Cl.: F02M 35/10, F02M 35/02, F02M 35/16, F02M 35/024, B60R 16/04

(54) **Ansaugsystem**
Intake system
Système d'admission

(30) Priorität: 29.10.1999 DE 19952136
(43) Veröffentlichungstag der Anmeldung: 02.05.2001
(73) Patentinhaber: Filterwerk Mann + Hummel GmbH, 71638 Ludwigsburg (DE)
(72) Erfinder: Spannbauer, Helmut, 71696 Möglingen (DE); Polifke, Mark, Dr., 70435 Stuttgart (DE); Amann, Matthias, 71686 Remseck (DE)
(74) Vertreter: Voth, Gerhard, Dipl.-Ing.

(56) Entgegenhaltungen:
- EP-A- 0 745 496
- DE-A- 4 412 474
- DE-A- 19 725 336

## Beschreibung

Die Erfindung betrifft ein Ansaugsystem mit einem Batteriekasten nach dem Oberbegriff des Patentanspruches 1.

Es ist aus der DE 197 25 336 eine Anlage zur Kühlung einer Batterie in einem Kraftfahrzeug bekannt. Die Anlage zur Kühlung der Batterie weist ein Batteriegehäuse auf, in welches die Batterie derart eingebracht ist, daß zwischen Batterie und Batteriegehäuse ringsherum ein Spalt vorhanden ist. Der Batteriekasten weist zwei Luftdurchtrittsöffnungen auf. Die erste Lufteintrittsöffnung ist mit einem Luftstutzen versehen, der Luft von außerhalb des Kraftfahrzeuges ansaugt. Die zweite Lufteintrittsöffnung ist mit einer Verbindungsleitung zum Ansaugsystem des Kraftfahrzeuges verbunden. Das Ansaugsystem besitzt eine Rohluftansaugleitung, welche kurz vor einem Filtergehäuse mit der Verbindungsleitung zusammengeführt wird. In dem Filtergehäuse ist ein Filterelement zur Reinigung von Ansaugluft angeordnet, welche einer Brennkraftmaschine zugeführt wird.

Bei dieser Anlage wird jedoch dem Batteriekasten nicht gereinigte Luft von außen zugeführt, wodurch sich Schmutz, wie z.B. Laub oder Staub in dem Batteriegehäuse ansammeln und den die Batterie umgebenden Spalt zusetzen kann. Dann findet keine Kühlung der Batterie mehr statt, sondern die Wärmeabstrahlung der Brennkraftmaschine wird direkt auf die Batterie übertragen. Weiterhin benötigt dieser Aufbau einer Anlage zur Kühlung einer Batterie einen großen Einbauraum, da alle Leitungen untergebracht und diese, um keine zu großen Luftreibungsverluste zu erhalten möglichst gerade geführt werden müssen, wodurch sich die Anlage schlecht in den Motorraum integrieren läßt.

Aufgabe der Erfindung ist es daher, ein Ansaugsystem mit einem Batteriekasten zu schaffen, welches einen geringen, an angrenzende Bauteile anpaßbaren Einbauraum benötigt und zur Kühlung der Batterie eingesetzt werden kann. Diese Aufgabe wird durch die Merkmale des Patentanspruches 1 gelöst.

Das erfindungsgemäße Ansaugsystem mit einem Batteriekasten für eine Brennkraftmaschine ist in vorteilhafter Weise geeignet, eine Batterie für ein Kraftfahrzeug zu Kühlen und dabei nur einen kleinen, an die angrenzenden Bauteile anpaßbaren Einbauraum zu benötigen. Hierzu weist das Ansaugsystem einen Rohlufteinlaß zum Ansaugen von Luft für die Brennkraftmaschine und eine Rohluftleitung, welche einerseits mit dem Rohlufteinlaß und andererseits mit einem Filtergehäuse verbunden ist auf. In dem Filtergehäuse ist ein Filterelement so angeordnet, daß eine Rohluftseite von einer Reinluftseite dichtend getrennt ist. Das Filtergehäuse enthält einen Reinluftauslaß, an welchen eine Reinluftleitung anschließt. Diese Reinluftleitung ist mit einem Ansaugluftverteiler der Brennkraftmaschine verbunden.

Zur Minimierung eines Einbauraumes für das Ansaugsystem ist das Filterelement gekrümmt in das Filtergehäuse eingebracht. Die Krümmung des Filterelementes ist derart ausgestaltet, daß das Filterelement mit mindestens einer Krümmung dem Konturverlauf einer Batteriekastenwand des angrenzenden, eigenständigen Batteriekastens folgt. Das Filterelement kann hierzu in einem fließenden Bogen, der keine Ecken oder abrupte Richtungsänderungen aufweist, ausgestaltet sein. Der Bogen kann bei bestimmten Ausführungen halbkreisartig ausgeführt sein. Es sind aber auch Krümmungen des Filterelementes denkbar, bei denen das Filterelement abrupte Richtungswechsel vollzieht, wie eine Knickung um z.B. 90°. Dadurch kann das Filterelement dem Konturverlauf der Batteriekastenwand in mindestens zwei Richtungen folgen. Der Batteriekasten umschließt einen Innenraum, in welchen eine Batterie für ein Kraftfahrzeug einsetzbar ist. Der durch den Batteriekasten gebildete Innenraum ist bei jeder Ausführung von den luftführenden Elementen des Ansaugsystems luftdicht getrennt, wodurch keine Luftströmung der Ansaugluft im Innenraum des Batteriekastens auftritt und eine Verschmutzung des Innenraumes verhindert wird.

Eine vorteilhafte Ausbildung des Ansaugsystems sieht eine Verbindung zwischen dem Filtergehäuse und dem Batteriekasten vor, wodurch die Lage beider Teile zueinander fixiert werden kann. Diese Verbindung kann lösbar oder unlösbar gestaltet sein. Als lösbare Verbindung können Schrauben dienen, welche Stege beider Teile miteinander verbinden. Eine weitere lösbare Verbindung stellt das Verklipsen beider Teile miteinander dar. Hierzu kann entweder der Batteriekasten oder das Filtergehäuse eine Aufnahme aufweisen, in welches ein Gegenstück, das sich an dem jeweils anderen Teil befindet, eingeklipst wird. Des weiteren ist ein Ineinanderschieben des Filtergehäuses mit dem Batteriekasten denkbar, wobei eines der beiden Teile eine Aufnahmeschiene und das andere Teil eine Einpaßschiene aufweist. Zur Bildung einer unlösbaren Verbindung der Teile miteinander können sie z.B. verklebt oder verschweißt sein.

Gemäß einer weiteren Ausgestaltung des Erfindungsgedankens bildet der Batteriekasten einen Teil des Filtergehäuses, wobei zur luftdichten Trennung der luftführenden Elemente wie Filtergehäuse, Rohluftleitung oder Reinluftleitung und des Innenraumes eine Trennwand vorgesehen ist. Das Filtergehäuse kann aus einem Rahmen und einem Gehäusedeckel bestehen, wobei der Rahmen mit dem Batteriekasten dichtend verbunden ist. Dies kann z.B. durch Kleben, Schweißen, Schrauben oder Nieten erfolgen.

Eine besonders vorteilhafte Ausbildung des Erfindungsgedankens ist eine einteilige Ausführung des Filtergehäuses mit dem Batteriekasten. Hierbei sind keine Elemente zum Verbinden der beiden Teile miteinander vorzusehen. Des weiteren ist ihre Lage zueinander exakt definiert und kann bei der Montage nicht verschoben werden. Weitere Vorteile dieser Ausführung sind Gewichtseinsparungen und ein kleinerer erforderlicher Einbauraum, da eine Bauteilwand und Verbindungselemente eingespart werden können.

Eine weitere Variante der Erfindung sieht vor, daß der Batteriekasten von den luftführenden Elementen des Ansaugsystems, wie z.B. der Roh- oder Reinluftleitung umgeben ist. Hierzu können diese luftführenden Elemente an mehreren Seiten des Batteriekastens in Kontakt mit der Batteriekastenwand stehen. Die luftführenden Elemente können mit der Batteriekastenwand durch z.B. Schrauben, Kleben, Schweißen, Klipsen verbunden sein oder teilweise durch die Batteriekastenwand gebildet werden. Weiterhin ist eine Ausführung denkbar, bei der die luftführenden Elemente als Isolation um den Batteriekasten herum geführt sind, aber keine direkte Verbindung mit dem Batteriekasten aufweisen.

Gemäß weiteren Ausgestaltungen der Erfindung kann das Filterelement in eine Filterelementaufnahme eingebracht werden, die sich entweder in einem Gehäusekörper oder einem Gehäusedeckel befindet, wobei der Gehäusekörper und der Gehäusedeckel das Filtergehäuse bilden. Die Filterelementaufnahme kann als Kontur in einem der beiden Filtergehäuseteile ausgebildet sein. Des weiteren ist eine Ausführung der Filterelementaufnahme als eigenständiges Bauteil z.B. in Form eines Rahmens denkbar. Hierzu wird das Filterelement in die Filterelementaufnahme eingebracht. Dies kann in dem Filtergehäuse oder außerhalb des Filtergehäuses erfolgen. Die Filterelementaufnahme kann in den Gehäusekörper oder den Gehäusedeckel eingebracht werden.

Eine besondere Ausführungsform des Filtergehäuses sieht die Verwendung von Schiebeklipsen zur Befestigung des Gehäusedeckels an dem Gehäusekörper vor. Der Gehäusedeckel kann mit einer oder mehreren Steckaufnahme/-n an einer Seite mit dem Gehäusekörper versteckt werden und zur luftdichten Befestigung des Gehäusedeckels an einer anderen Seite mit den Schiebeklipsen fixiert werden. Diese Befestigung bietet über einen großen Bereich eine gute Anpreßkraft, welche die Dichtheit des Filtergehäuses gewährleistet und dabei eine sichere, bei Wartungsarbeiten einfach zu lösende Verbindung darstellt. Alternativ zu den Schiebeklipsen sind z.B. Ausführungen mit Schnapphaken, Spangen oder Schrauben möglich.

Es ist vorteilhaft, daß die Rohluftleitung im größten Querschnitt eines sich verjüngenden Kanal einmündet. Dieser Kanal kann an einer Stirnseite durch das Filtergehäuse gebildet werden. Eine Anströmung des Filterelementes in einem sich verjüngenden Kanal bewirkt eine bessere Verteilung der Luft und somit eine längere Standzeit des Filterelementes.

Eine besondere Ausführungsform des Erfindungsgedankens sieht einen sich verjüngenden Kanal über einer Filterfläche des Filterelementes vor, der durch das Filterelement und das Filtergehäuse gebildet wird. Das Filterelement ist bei dieser Ausführung als Rechteckpatrone ausgeführt, die gekrümmt in die Filterelementaufnahme eingebracht ist. Das Filterelement weist vier Ränder auf, von denen sich jeweils zwei Ränder gegenüberliegen. Die Krümmung des Filterelementes ist bogenförmig ausgeführt, derart, daß zwei Ränder gekrümmt und zwei Ränder nicht gekrümmt sind. Die Ränder verlaufen auch im gekrümmten Zustand parallel zueinander. Die gekrümmten Ränder weisen keine Wendepunkte auf. Weiterhin ist das Filterelement derart in das Filtergehäuse eingebracht, daß das Filterelement mit seiner konvexen Seite zu dem sich verjüngenden Kanal hin weist. Die Rohluftleitung ist mit dem sich verjüngenden Kanal in einem Bereich verbunden, in welchem der Kanal seinen größten Querschnitt aufweist. Weiterhin ist die Rohluftleitung derart angebracht, daß die Luft nahezu tangential auf das Filterelement auftrifft. Diese Ausführungsform ist strömungstechnisch optimiert ausgeführt, wodurch das Filterelement über die gesamte Filterfläche gleichmäßig angeströmt wird und sich dadurch die Standzeit des Filterelementes erhöhen läßt.

Es ist vorteilhaft, daß das Filtergehäuse und der Batteriekasten im Kunststoffspritzgießverfahren hergestellt sind. Dadurch lassen sich aufwendige Konturen einfach erzeugen, des weiteren weisen Ausführungen aus Kunststoff ein geringes Bauteilgewicht auf.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnungen

Weitere Einzelheiten der Erfindung werden in den Zeichnungen anhand von schematischen Ausführungsbeispielen beschrieben.

Hierbei zeigt
- Figur 1: einen schematischen Aufbau eines Ansaugsystems und
- Figur 2: eine perspektivische Darstellung eines Ansaugsystems.

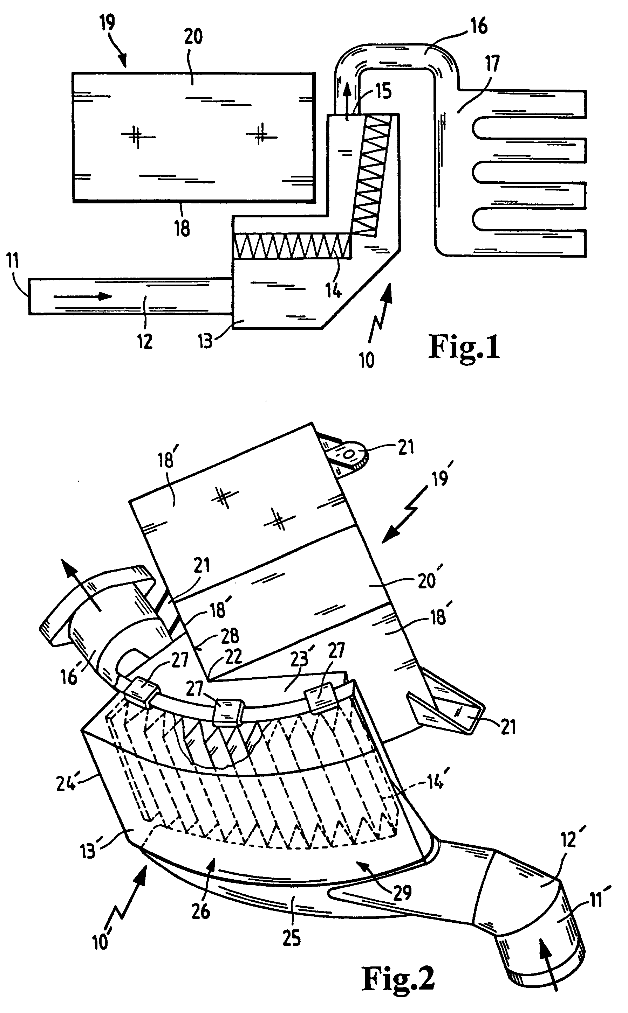

In Figur 1 ist ein Ansaugsystem 10 schematisch dargestellt. Das Ansaugsystem 10 weist mindestens einen Rohlufteinlaß 11, eine Rohluftleitung 12, ein Filtergehäuse 13, ein Filterelement 14, einen Reinluftauslaß 15, eine Reinluftleitung 16 und einen Ansaugluftverteiler 17 auf. Die Rohluftleitung 12 und die Reinluftleitung 16 sind mit dem Filtergehäuse 13 verbunden. Das Filterelement 14 ist dichtend in das Filtergehäuse 13 eingebracht, so daß die Luft, die durch die Rohluftleitung 12 einströmt, das Filterelement 14 durchströmen muß, um in die Reinluftleitung 16 zu gelangen. Weiterhin ist das Filterelement 14 derart in dem Filtergehäuse 13 angeordnet, daß es einem Konturverlauf einer Batteriekastenwand 18, welche einen Batteriekasten 19 mit einem Innenraum 20 bildet, folgt. Das Filterelement 14 ist als Flachpatrone ausgeführt und kann gebogen sein oder aus mehreren Teilen bestehen, die dichtend aneinander gefügt sind. Das Filterelement 14 muß jedoch nicht die exakt gleiche Geometrie, wie der Konturverlauf des Batteriekastens 19 ist, aufweisen. Eine abgeschwächte Annäherung an diesen Konturverlauf ist ausreichend, um einen zur Verfügung stehenden Einbauraum optimal zu nutzen. Die luftführenden Elementen 12, 13, 16, 17 weisen keine Verbindungsstellen mit dem Batteriekasten 19 auf. Der Innenraum 20, in welchen eine Batterie (nicht dargestellt) eingebracht werden kann, ist luftdicht von den luftführenden Elementen 12, 13, 16, 17 getrennt.

In Figur 2 ist ein Ansaugsystem 10' in perspektivischer Ansicht dargestellt, wobei der Ansaugluftverteiler 17 gemäß Figur 1 nicht abgebildet ist. Der Batteriekasten 19' und das Filtergehäuse 13' sind bei diesem Beispiel einteilig ausgeführt, wodurch die Batteriekastenwand 18' einen Teil eines Gehäusekörpers 23' der gemeinsam mit einem Gehäusedeckel 24' das Filtergehäuse 13' bildet. Der Batteriekasten 19' weist Befestigungsstege 21 zur Befestigung des Batteriekastens 19' an einer Fahrzeugkarosse (nicht dargestellt) auf. Die Batteriekastenwand 18' ist für Luft undurchlässig und bildet eine Trennwand 28 zwischen dem Innenraum 20' und einem Filterraum 29. Das Filterelement 14' ist gekrümmt in das Filtergehäuse 13' eingebracht, so daß das Filterelement 14' mit einer konkaven Seite einer Kontur des Batteriekastens zumindest teilweise folgt, indem eine Ecke 22 des Batteriekastens 19' umgeben ist. Der Gehäusedeckel 24' ist bei diesem Ausführungsbeispiel mit der Rohluftleitung 12' verbunden, wobei die Rohluftleitung 12' in einen sich verjüngenden Kanal 25, der an einer Stirnseite 26 angeordnet ist, mündet. Der Gehäusedeckel 24' ist mit Schiebeklipsen 27 an dem Gehäusekörper 23' befestigt. Diese Schiebeklipse 27 können durch Verschieben in eine Offen- oder Geschlossenstellung gebracht werden. Beim Verschieben der Schiebeklipse 27 in die Geschlossenstellung kann eine Rastung (nicht dargestellt) vorgesehen sein, die eine rüttelsichere Verbindung der Gehäuseteile 23', 24' erzeugt. Diese Verbindung ist aber bei Wartungsarbeiten von Hand einfach durch Verschieben der Schiebeklipse 27 zu lösen.

## Patentansprüche

1. Ansaugsystem (10) mit einem Batteriekasten (19), für eine Brennkraftmaschine, aufweisend
- einen Rohlufteinlaß (11),
- eine Rohluftleitung (12), welche mit einem Filtergehäuse (13) verbunden ist,
- eine Reinluftleitung (16), die mit dem Filtergehäuse (13) und einem Ansaugluftverteiler (17) verbunden ist, wobei die Rohluftleitung (12) von der Reinluftleitung (16) durch mindestens ein in dem Filtergehäuse (13) angeordneten Filterelement (14) getrennt ist, **dadurch gekennzeichnet,**
- **daß** das Filterelement (14) derart um den Batteriekasten (19) angeordnet ist, daß dieses mindestens einer Krümmung im Konturverlauf einer Batteriekastenwand (18) folgt,
- **daß** ein von dem Batteriekasten (19) gebildeter Innenraum (20) von luftführenden Elementen (12, 13, 16) des Ansaugsystems (10) luftdicht getrennt ist.

2. Ansaugsystem (10) nach Anspruch 1, **dadurch gekennzeichnet, daß** das Filtergehäuse (13) und der Batteriekasten (19) miteinander verbunden sind.

3. Ansaugsystem (10) nach Anspruch 1, **dadurch gekennzeichnet, daß** der Batteriekasten (19) einen Teil des Filtergehäuses (13) bildet, wobei zur luftdichten Trennung zwischen dem von der Batteriekastenwand (18) gebildeten Innenraum (20) und den luftführenden Elementen (12,13,16) eine Trennwand (28) vorgesehen ist.

4. Ansaugsystem (10) nach Anspruch 3, **dadurch gekennzeichnet, daß** das Filtergehäuse (13) und der Batteriekasten (19) einteilig ausgeführt ist.

5. Ansaugsystem (10) nach einem der vorangehenden Ansprüche, **dadurch gekennzeichnet, daß** der Batteriekasten (19) zumindest teilweise von den luftführenden Elementen (12,13,16) des Ansaugsystems (10) umgeben ist.

6. Ansaugsystem (10) nach einem der vorangehenden Ansprüche, **dadurch gekennzeichnet, daß** das Filtergehäuse (13) einen Gehäusekörper (23) und einen Gehäusedeckel (24) aufweist, wobei eine Filterelementaufnahme für das Filterelement im Gehäusekörper (23) oder Gehäusedeckel (24) vorgesehen ist.

7. Ansaugsystem (10) nach Anspruch 6, **dadurch gekennzeichnet, daß** der Gehäusedeckel (24) durch Schiebeklipse (27) mit dem Gehäusekörper (23) verbunden ist.

8. Ansaugsystem (10) nach einem der vorangehenden Ansprüche, **dadurch gekennzeichnet, daß** die Rohluftleitung (12) in einen sich verjüngenden Kanal (25) mündet.

9. Ansaugsystem (10) nach Anspruch 8, **dadurch gekennzeichnet, daß** der sich verjüngende Kanal (25) durch das Filterelement (14) und das Filtergehäuse (13) gebildet wird und daß das Filterelement (14) als Rechteckpatrone ausgeführt und in der Filterelementaufnahme gekrümmt eingebracht ist, wobei
- je zwei gegenüberliegende Ränder des Filterelementes (14) parallel verlaufen und
- die anderen beiden Ränder eine Krümmung ohne Wendepunkte aufweisen,
- die konvexe Seite der Krümmung zur Rohluftleitung (12) hin weist und die Rohluftleitung (12) derart in den sich verjüngenden Kanal (25) mündet, daß diese auf das Filterelement (14) in dem Bereich des größten Querschnitts des sich verjüngenden Kanals (25) gerichtet ist.

10. Ansaugsystem (10) nach einem der vorangehenden Ansprüche, **dadurch gekennzeichnet, daß** das Filtergehäuse (13) und der Batteriekasten (19) im Kunststoffspritzgießverfahren hergestellt sind.

## Claims

1. Intake system (10) with a battery box (19) for an internal combustion engine, comprising :
- a non filtered air intake (11),
- a non filtered air pipe (12) which is connected to a filter housing (13),
- a clean air pipe (16) which is connected to the filter housing (13) and to an intake air manifold (17) ; the said non filtered air pipe (12) being separated from the clean air pipe (16) by at least a filtering element (14) arranged in the filter housing (13), **characterised in that**,
the filtering element (14) is arranged around the battery box (19) so that the said element follows at least a curve in the contour of a battery box's wall (18),
- an internal chamber (20) being formed by the battery box (19) is separated airtight from air conducting elements (12, 13, 16) of the intake system (10).

2. Intake system (10) according to claim 1, **characterised in that** the filter housing (13) and the battery box (19) are connected to each other.

3. Intake system (10) according to claim 1, **characterised in that** the battery box (19) forms a part of the filtering housing (13); a separating wall (28) being provided for airtightly separating the internal chamber (20) formed by the battery box wall (18) and the air conducting elements (12, 13, 16).

4. Intake system (10) according to claim 3, **characterised in that** the filter housing (13) and the battery box (19) are realised in one part .

5. Intake system (10) according to one of the preceding claims, **characterised in that** the battery box (19) is surrounded at least partially by the air conducting elements (12, 13, 16) of the intake system (10).

6. Intake system (10) according to one of the preceding claims, **characterised in that** the filter housing (13) presents a housing body (23) and a housing cover (24) ; the filtering element reception for the filtering element being provided in the housing body (23) or housing cover (24).

7. Intake system (10) according to claim 6, **characterised in that** the housing cover (24) is connected to the housing body (23) by sliding clips (27).

8. Intake system (10) according to one of the preceding claims, **characterised in that** the non filtered air pipe (12) meets a tapering channel (25).

9. Intake system (10) according to claim 8, **characterised in that** the tapering channel (25) is formed by the filtering element (14) and the filter housing (13) and **in that** the filtering element (14) is realised in a form of an rectangular cartridge and implemented curved in the filtering element's reception ; whereby
- each of the two opposite edges of the filtering element (14) is parallel and
- the other two edges present a curve without inflection point,
- the convex side of the curve is orientated to the non filtered air pipe (12) and the non filtered air pipe (12) meets the tapering channel in such a way that the said non filtered air pipe is orientated towards the filtering element (14) in the area of the biggest cross section of the tapering channel (25).

10. Intake system (10) according to one of the preceding claims, **characterised in that** the filter housing (13) and the battery box (19) are produced according to a plastic injection moulding method.

## Revendications

1. Système d'aspiration (10) avec un boîtier de batterie (19) pour une machine de combustion interne, présentant :
- une entrée d'air non filtré (11),
- une conduite d'air non filtré (12) qui est reliée à un boîtier de filtres (13),
- une conduite d'air propre (16) qui est reliée au boîtier de filtres (13) et un distributeur d'air d'aspiration (17) ; la conduite d'air (12) étant séparée de la conduite d'air propre (16) par au moins un élément de filtration (14) disposé dans le boîtier de filtres (13), **caractérisé en ce que**,
- l'élément de filtration (14) est disposé autour du boîtier de batterie (19) de manière à conduire à au moins une courbe dans le contour d'une paroi du boîtier de batterie (18),
- une chambre intérieure (20) formée par le boîtier de batterie (19) est séparée de manière étanche par des éléments conducteur d'air (12, 13, 16) du système d'aspiration (10).

2. Un système d'aspiration (1à) selon la revendication 1, **caractérisé en ce que** le boîtier de filtres (13) et le boîtier de batterie (19) sont reliés entre eux.

3. Un système d'aspiration (10) selon la revendication 1, **caractérisé en ce que** le boîtier de batterie (19) forme une partie du boîtier de filtres (13) ; une paroi de séparation (28) étant prévue pour séparer de manière étanche la chambre intérieure (20) formée par la paroi du boîtier de batterie (18) et les éléments conducteur (s ) d'air (12, 13, 16).

4. Un système d'aspiration (10) selon la revendication 3, **caractérisé en ce que** le boîtier de filtres (13) et le boîtier de batterie (19) ne font qu'une et seule pièce.

5. Un système d'aspiration (10) selon une des revendications précédentes, **caractérisé en ce que** le boîtier de batterie (19) est entouré au moins en partie par des éléments conducteur (s) d'air (12, 13, 16) du système d'aspiration (10).

6. Un système d'aspiration (10) selon une des revendications précédentes, **caractérisé en ce que** le boîtier de filtration (13) présente un corps de boîtier (23) et un couvercle de boîtier (24) ; une réception de l'élément de filtration destiné à l'élément de filtration est prévue dans le corps du boîtier (23) ou le couvercle du boîtier (24).

7. Un système d'aspiration (10) selon la revendication 6, **caractérisé en ce que** le couvercle du boîtier (24) est relié par des clips coulissants (27) au corps du boîtier (23).

8. Un système d'aspiration (10) selon une des revendications précédentes, **caractérisé en ce que** la conduite d'air non filtré (12) débouche dans un canal (25) se rétrécissant .

9. Un système d'aspiration (10) selon la revendication 8, **caractérisé en ce que** le canal (25) se rétrécissant est formé par l'élément de filtration (14) et le boîtier de filtres (13) et **en ce que** l'élément de filtration (14) est réalisé en tant que cartouche rectangulaire et est introduit de manière courbée dans la réception de l'élément de filtration ;
- chaque bord de l'élément de filtration (14) situés l'un en face de l'autre s'étend de manière parallèle et
- les deux autres bords présentent une courbe sans point d'inflexion ,
- le côté convexe de la courbe est orienté vers la conduite d'air non filtré (12) et la conduite d'air non filtré (12) débouche dans le canal (25) se rétrécissant de manière à ce que ladite conduite est dirigée vers l'élément de filtration (14) dans la zone de la plus grande section transversale du canal (25) se rétrécissant.

10. Un système d'aspiration (10) selon une des revendications précédentes, **caractérisé en ce que** le boîtier de filtration (13) et le boîtier de batterie (19) sont fabriqués selon un principe de moulage par injection de matière plastique.
